# EUROPÄISCHE PATENTSCHRIFT

(11) **EP 0 535 409 B1**
(45) Veröffentlichungstag und Bekanntmachung des Hinweises auf die Patenterteilung: **07.02.1996**
(21) Anmeldenummer: 92115324.3
(22) Anmeldetag: 08.09.1992
(51) Int. Cl.: B60G 15/07, F16F 9/36

(54) **Hydraulischer Schwingungsdämpfer für Kraftfahrzeuge**
Hydraulic shock absorber for a motor vehicle
Amortisseur hydraulique pour véhicule automobile

(30) Priorität: 01.10.1991 DE 4132734; 29.10.1991 DE 4135576; 06.03.1992 DE 4207099
(43) Veröffentlichungstag der Anmeldung: 07.04.1993
(73) Patentinhaber: AUGUST BILSTEIN GMBH & CO. KG, D-58240 Ennepetal (DE)
(72) Erfinder: Adrian, Adolf, W-5828 Ennepetal 13 (DE); Angermann, Rolf, Dr.-Ing., W-5804 Herdecke (DE); Hölscher, Reinhard, Dr.-Ing., W-4796 Salzkotten (DE); Grün, Wolfgang, Dipl.-Ing., W-5828 Ennepetal 1 (DE); Zeibig, Uwe, Dipl.-Ing., W-7592 Renchen-Ulm (DE)

(56) Entgegenhaltungen:
- DE-A- 3 202 705
- DE-A- 4 030 788
- DE-U- 7 338 870
- FR-A- 2 175 985
- FR-A- 2 510 215
- FR-A- 2 526 904
- GB-A- 2 053 411
- GB-A- 2 092 262
- GB-A- 2 243 898

## Beschreibung

Die Erfindung betrifft einen hydraulischen Schwingungsdämpfer für Kraftfahrzeuge mit einem Dämpfungsflüssigkeit enthaltenden Dämpferzylinder, einer in diesem sich hin- und herbewegenden, einen Dämpfungskolben tragenden Kolbenstange und einen am von der Kolbenstange durchdrungenen Ende angeordneten, einen Schleppölentlastungskanal aufweisenden Führungsverschluß mit einem zylinderförmigen Führungsteil für die Kolbenstange, einer die Kolbenstange kontaktierenden Öldichtung und einer aus mehreren, aus blechgeformten Teilen gebildeten Abstütz- und Distanzeinheit, die das zylinderförmige Führungsteil der Kolbenstange am Dämpferzylinder radial und axial abstützt, wobei ein erstes Ringformteil einen im wesentlichen becherförmigen Querschnitt aufweist.

Bekannte hydraulische Schwingungsdämpfer weisen massive Führungsverschlüsse auf, deren Metallteile durch Gießen oder Sintern mit nachfolgender spanender Bearbeitung gefertigt werden. Dies bedingt einen hohen Herstellungsaufwand und einen höheren Masseanteil für den Schwingungsdämpfer.

Die deutsche Offenlegungsschrift DE 40 30 788 beschreibt einen Führungsverschluß für einen Zweirohrschwingungsdämpfer, der aus einem rohrförmigen Stangenführungsteil, einer Öldichtung und einem gepreßten Plattenteil besteht. Zum Abfangen der Zuganschlagkräfte ist bunter der Stangenführung ein zusätzlicher Anschlag angeordnet. Der Führungsverschluß bessert zwar die Nachteile bekannter Kolbenstangenführungen, ist jedoch nicht für Einrohrschwingungsdämpfer mit höheren Anforderungen man das Führungspaket anwendbar, insbesondere ist die Starrheit des Führungsverschlusses gegen die Last nicht ausreichend.

Damit ist es die Aufgabe der Erfindung, einen Führungsverschluß zu schaffen, der mit seiner Grundkonstruktion für Einrohr- und Zweirohrdämpfer einsetzbar ist, dessen Teile einfach herstellbar und montierbar sind, der leicht einbaubar ist und dessen Masseanteil am Schwingungsdämpfer gering ist.

Die Aufgabe wird durch die kennzeichnenden Merkmale des Hauptanspruchs gelöst, wobei die Unteransprüche vorteilhafte Ausgestaltungen darstellen. Erfindungsgemäß weist die Abstütz- und Distanzeinheit mindestens ein weiteres, das Ringformteil teilweise überlappendes Ringformteil auf, wobei das Ringformteil zur Bildung eines Hohlraumes das Ringformteil verschließt.

Die Abstütz- und Distanzeinheit hält an ihrer der Kolbenstange zugewandten Seite die die Kolbenstange umgebende Öldichtung.

Die aus einem ersten und einem zweiten Ringformteil gebildete Abstütz- und Distanzeinheit weist einen einen Hohlraum umschließenden, beliebig geformten Querschnitt auf, der in einer Ausgestaltung im wesentliche rechteckförmig ist.

Bei der Erfindung besteht die Stütz- und Distanzeinheit aus einem ersten Ringformteil mit einem becherförmigen Querschnitt und einem das erste Ringformteil verschließenden zweiten Ringformteil, wobei bei einem Einrohrschwingungsdämpfer zum Beispiel das zweite Ringformteil, den Arbeitsraum des Schwingungsdämpfers und den Schleppölentlastungskanal abdichtend, an der Innenwandung des Dämpferzylinders und am zylinderförmigen Führungsteil der Kolbenstange anliegt, jedoch auch andere Ausbildungen möglich sind.

In einer anderen Ausführung weist die Abstütz- und Distanzeinheit ein weiteres als Abschlußkappe ausgebildetes Ringformteil auf, daß den Dämpferzylinder abdichtend verschließt.

Zum Rückführen des von der Kolbenstange mitgeführten Öls weist das erste Ringformteil in einer Ausführung für den Einrohrdämpfer eine Bohrung auf, die den Schleppölentlastungskanal von der die Kolbenstange kontraktierenden Öldichtung zum Arbeitsraum des Schwingungsdämpfers bildet.

Bei einer Ausbildung für einen Zweirohrdämpfer übergreift das das erste Ringformteil verschließende zweite Ringformteil die Wandung des Dämpferzylinders abstandsweise und stützt sich am Außenzylinder und/oder der Abschlußkappe ab. Das becherförmige erste Ringformteil stützt sich an der Innenwandung des Dämpferzylinders ab und das sich abstützende Teil umgreift den Dämpferzylinder.

Das erste oder zweite Ringformteil weist eine Entlüftungsbohrung auf, die einen Kanal zwischen dem Ringraum der Öldichtung und dem durch den Außenzylinder geformten Ausgleichsraum bildet, wobei der Kanal ausgleichsraumseitig durch ein Rückschlagventil verschlossen ist. Es sind unterschiedlichste Ausbildungen des Rückschlagventils möglich.

Das Bodenteil des ersten, einen im wesentlichen becherförmigen Querschnitt aufweisenden Ringformteils ist in einer Ausführung wenigstens einmal gekröpft, wodurch bei Einrohrschwingungsdämpfern eine höhere Stabilität gegenüber den durch den Ein- und Ausfahrhub der Kolbenstange entstehenden Kräften gegeben ist. Beim Zweirohrdämpfer kann das Führungsteil der Kolbenstange somit am Dämpferzylinder und am Außenzylinder abgestützt werden, da das nach oben gebogene Teil am Dämpferzylinder anliegt.

Das zweite Ringformteil hält in einer Ausbildung die die Kolbenstange kontaktierende Öldichtung und dichtet den Dämpferzylinder bzw. den Außenzylinder des Schwingungsdämpfers an der der Kolbenstange abgewandten Seite das erste Ringformteil überlappend mittels einer weiteren Dichtung ab.

Die Fixierung des Führungsverschlusses im Zylinder wird die Abstütz- und Distanzeinheit durch die voll oder teilweise umbördelte Kante des Dämpferzylinders und/oder mittels Einsickungen oder einer Einschnürung in der Wandung des Dämpferzylinders fixiert. Bei Zweirohrdämpfern erfolgt die Fixierung entsprechend durch den Außenzylinder.

Der erfindungsgemäße Führungsverschluß hat gegenüber bekannten Kolbenstangenführungen für Schwingungsdämpfer den Vorteil, daß seine Ringformteile einfach herstellbar sind, eine geringe Masse in den Schwingungsdämpfer einbringen und auf einfache Weise in den Schwingungsdämpfer montiert werden können, da der Führungsverschluß als komplette Baugruppe mit Führungsteil und Öldichtung vorfertigbar ist. Die in der Zugstufe auftretenden Zuganschlagskräfte und auch die Anschlagkräfte der Druckstufe werden von dem Führungsverschluß aufgenommen.

Nachfolgend wird die Erfindung anhand von Ausführungsbeispielen näher erläutert. Die zugehörigen Zeichnungen zeigen:
- Fig. 1: einen Einrohrschwingungsdämpfer aus dem Stand der Technik,
- Fig. 2: den Ausschnitt eines Einrohrschwingungsdämpfer mit einem erfindungsgemäßen Führungsverschluß,
- Fig. 3: eine weitere Variante des erfindungsgemäßen Führungsverschluß für einen Einrohrdämpfer,
- Fig. 4: einen Führungsverschluß, bei dem das zweite Ringformteil das erste Ringformteil teilweise überlappt,
- Fig. 5: eine weitere Variante des Führungsverschlusses, bei dem das zweite Ringformteil das erste Ringformteil teilweise überlappt,
- Fig. 6: einen Führungsverschluß für einen Einrohrschwingungsdämpfer, bei dem die Stütz- und Distanzeinheit mittels einer Einschnürung fixiert ist,
- Fig. 7: einen Führungsverschluß, bei dem die die Stütz- und Distanzeinheit gegenüber dem Dampferzylinder abdichtende Dichtung mittels einer Einschnürung vorgespannt wird,
- Fig. 8: einen Führungsverschluß, bei dem die Stütz- und Distanzeinheit mittels Einsickungen fixiert ist,
- Fig. 9: einen Zweirohrdämpfer aus dem Stand der Technik
- Fig. 10: den Ausschnitt eines Zweirohrvorderachsfederbeins mit einem erfindungsgemäßen Führungsverschluß mit drei Ringformteilen
- Fig. 11: einen Führungsverschluß für einen Zweirohrschwingungsdämpfer und

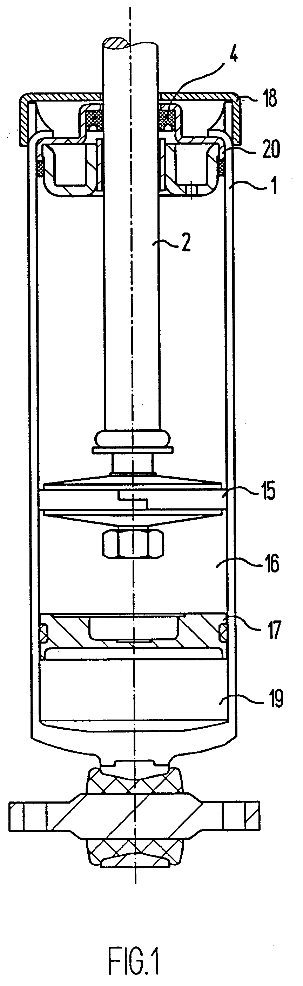

Der in Fig. 1 dargestellte, hydraulische Einrohrschwingungsdämpfer besteht im wesentlichen aus einem Dämpfungsflüssigkeit enthaltenden Dämpferzylinder 1, der durch einen Führungsverschluß 20 verschlossen ist und einem mit der Kolbenstange 2 verbundenen Dämpferkolben 15. Im Dämpferzylinder 1 befindet sich ein Arbeitsraum 16, der durch den Trennkolben 17 vom mit Gas gefüllten Ausgleichsraum 19, welcher zur Kompensation der Volumenzu- bzw. -abnahme im hydraulischen Arbeitsraum 16 durch das ein- bzw. ausfahrende Eigenvolumen der Kolbenstange 2 dient, getrennt ist. Die Kolbenstange 2 gleitet durch den Führungsverschluß 20 hindurch und steht mit einer Öldichtung 4 in Kontakt, um die Öffnung der Zylinderanordnung abzudichten. Über dem Führungsverschluß 20 ist weiterhin eine die Kolbenstange 2 umgreifende Ringplatte 18 zum Beispiel über eine Klemm- oder Schweißverbindung befestigt. Die Ringplatte 18 dient als Gummipufferanschlag bei Einfahrhubende.

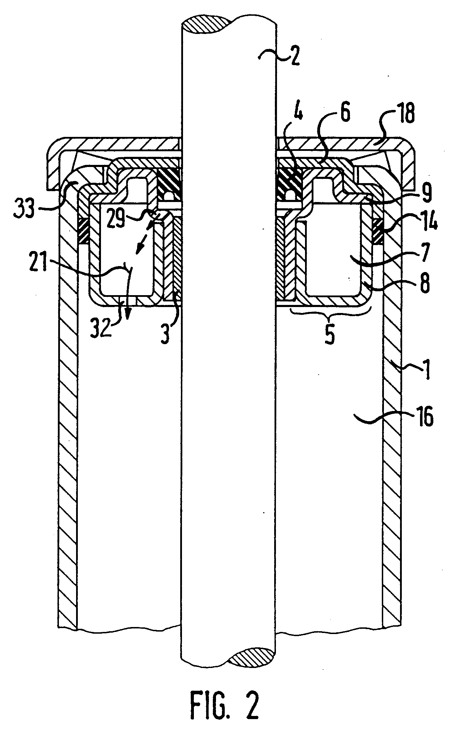

Fig. 2 zeigt einen erfindungsgemäßen Führungsverschluß, bestehend aus einem zylinderförmigen Führungsteil 3, das die Ein-und Ausfahrhübe der Kolbenstange 2 führt, einer aus Blech geformten Teilen bestehenden Abstütz- und Distanzeinheit 5, die das Führungsteil 3 an der Innenwandung des Dämpferzylinders 1 und der Abschlußkappe 6 abstützt, und einer oberhalb des Führungsteils 3 angeordneten, von der Stütz- und Distanzeinheit 5 gelagerten oder gehaltenen Öldichtung 4. Die aus zwei Ringformteilen 8, 9 bestehende ringförmige Abstütz- und Distanzeinheit 5 weist einen, einen Hohlraum 7 umschließenden rechteckförmigen Querschnitt auf, wobei das Ringformteil 9 das becherförmige Ringformteil 8 am Führungsteil 3 und an der Wandung des Dämpferzylinders 1 teilweise überlappt und an der Außenwandung des Führungsteils 3 anliegt.

Für die Rückführung des von der Kolbenstange 2 in der Zugstufe mitgeführten Öls verläuft der Schleppölentlastungskanal 21 von der Öldichtung 4 über eine Bohrung oder Schlitze 29 im Ringformteil 9, den Hohlraum 7 und eine Bohrung 32 im Boden des becherförmigen Ringteils 8 zum Arbeitsraum 16. Zur Abdichtung des Arbeitsraums 16 des Schwingungsdämpfers und des Schleppölentlastungskanals 21 ist an der äußeren Kante der Abschlußkappe 6 zwischen dem Ringformteil 8 und der Wandung des Dämpferzylinders 1 eine Ringdichtung 14 eingepaßt.

Durch die teilweise Umbördelung der oberen Kante 33 des Dämpferzylinders wird die Abschlußkappe 6 und damit der gesamte Führungsverschluß im Dämpferzylinder 1 fixiert. Auf den nicht umbördelten Teilen der Kante 33 liegt die Ringplatte 18, die als Gummipufferanschlag dient, auf.

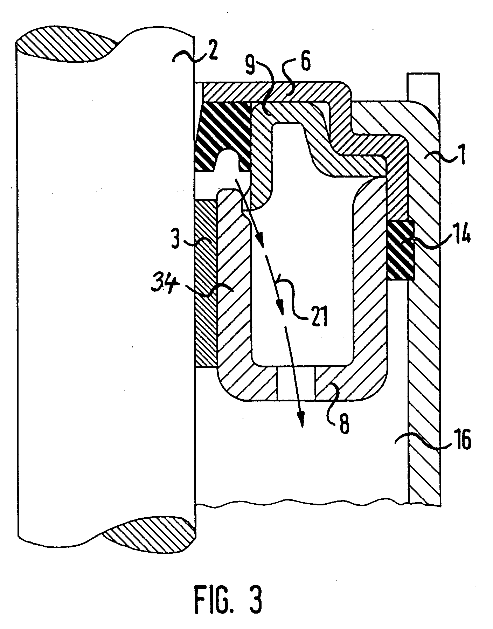

Fig. 3 zeigt eine Abstütz- und Distanzeinheit, bei der das Ringformteil 9 das becherförmige Ringformteil 8 verschließt, jedoch nicht überlappt. Das innere Teil 34 des Ringformteils 8 liegt damit am Führungsteil 3 der Kolbenstange 2 an. Denkbar wäre hier zum Beispiel, daß das Teil 34 des Ringformteils 8 an seiner der Kolbenstange 2 zugewandten Seite beschichtet wird und als Kolbenstangenführung dient, damit könnte das Führungsteil 3 wegfallen. Das Ringformteil 9 stützt sich nur an der Abschlußkappe 6 ab, die derart geformt ist, daß sie an der Innenwandung des Dämpferzylinders 1 anliegt und das Ringformteil 8 teilweise überlappt. Zur Abdichtung des Arbeitsraums 16 des Schwingungsdämpfers und des Schleppölentlastungskanals 21 nach außen wurde zwischen der Wandung des Dämpferzylinders 1 und dem Ringformteil 8 eine Dichtung 14 angeordnet, die an der Stirnseite der Abschlußkappe 6 zur Anlage kommt.

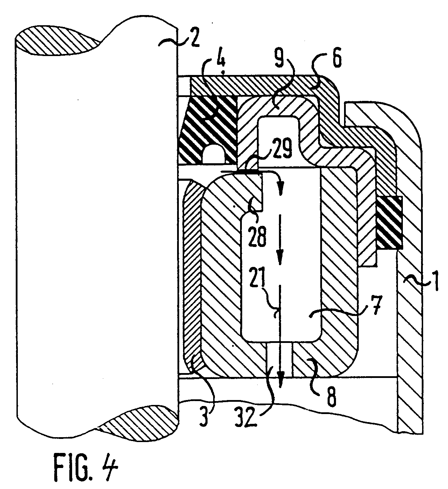

Bei dem in Fig. 4 gezeigten Führungsverschluß besteht die Abstütz- und Distanzeinheit aus dem becherförmigen Ringformteil 8, dessen am Führungsteil 3 anliegende Wandung ein kurzes nach innen gebogenes Teil 28 aufweist, auf dem sich das Ringformteil 9 abstützt. An der Wandung des Dämpferzylinders 1 wird das Ringformteil 8 vom Ringformteil 9 überlappt, das außerdem an der die Öldichtung 4 tragenden Abschlußkappe 6 anliegt. Der Ölschleppentlastungskanal 21 wird durch Schlitze 29 im Ringformteil 9 den Hohlraum 7 und eine Bohrung 32 im Boden des Ringformteils 8 gebildet. Das zweite Ringformteil 9 und das erste Ringformteil 6 sind derart geformt, daß an der Kolbenstange 2 oberhalb des Führungsteils 3 ein Ringraum gebildet wird, in dem sich die von den Ringformteilen gehaltene Öldichtung 4 befindet.

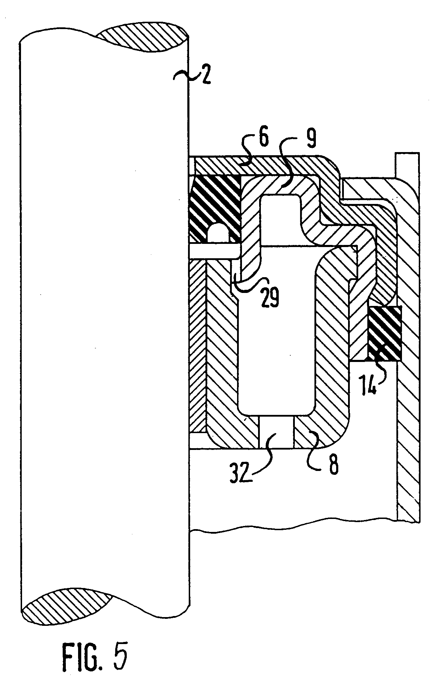

Fig. 5 zeigt eine andere mögliche Variante einer Abstütz- und Distanzeinheit, bei der die das Ringformteil 9 überlappende Seite der Abschlußkappe 6 zur Vorspannung der Dichtung 14 gegen das Ringformteil 9 verstemmt ist. Die Schlitze 29 für den Entlastungskanal wurden wie auch die Bohrung 32 in das Ringformteil 8 eingearbeitet.

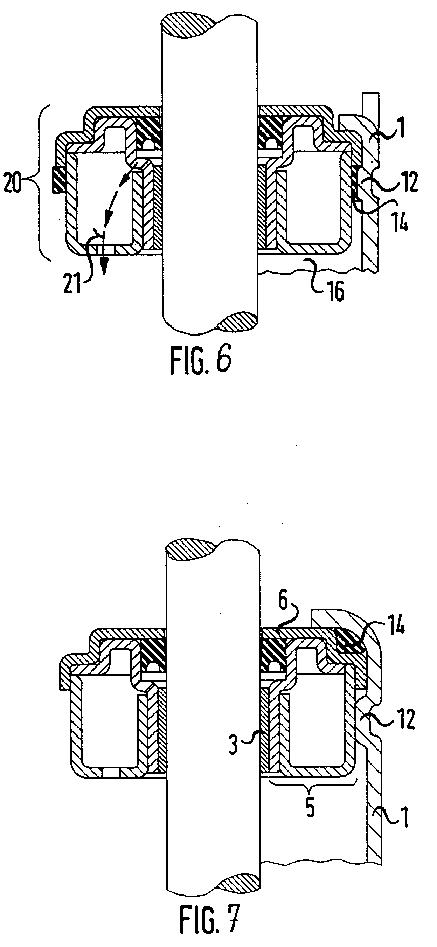

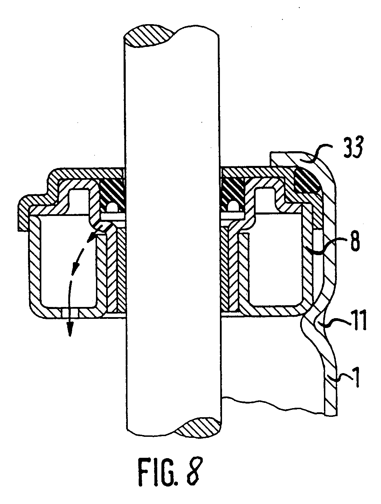

Eine andere Möglichkeit die zur Abdichtung des Arbeitsraumes 16 und des Schleppölentlastungskanals 21 notwenige Dichtung 14 vorzuspannen, zeigt Fig. 6. Dazu weist die Wandung des Dämpferzylinders 1 eine radial am Umfang verlaufende Einschnürung 12 auf, die gleichzeitig zur zusätzlichen Fixierung des gesamten Führungsverschlusses 20 dient.

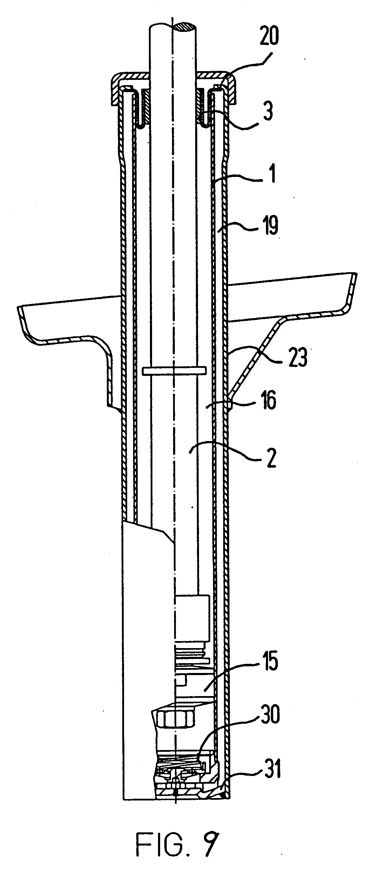

In Fig. 7 wurde die als Ringdichtung ausgebildete Dichtung 14 oberhalb der Abstütz- und Distanzeinheit 5 zwischen der vollständig umgekröpften Kante des Dämpferzylinders 1 und der stufenförmig gebogenen Abschlußkappe 6 angeordnet. Die Einschnürung 12 an der Wandung des Dämpferzylinders 1 dient hier nur zur Halterung des Führungsteils 3 und der Abstütz- und Distanzeinheit 5 im Dämpferzylinder 1.

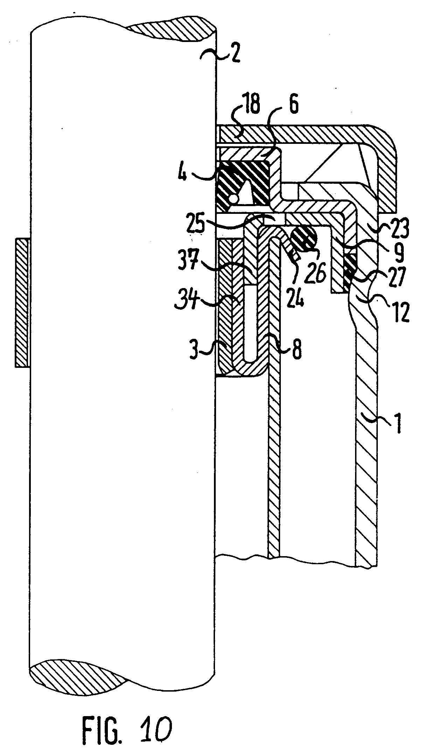

Eine andere Art der Fixierung des Führungsverschlusses ist in Fig. 8 gezeigt, bei der in der Wandung des Dämpferzylinders 1 unterhalb des Führungsverschlusses auf dem Umfang verteilt Einsickungen 11 eingebracht sind, auf denen das Ringformteil 8 der Abstütz- und Distanzeinheit zu liegen kommt.

Die obere Fixierung des Führungsverschlusses wird durch die vollständig umkröpfte Kante 33 des Dämpferzylinders 1 realisiert.

Für die Rückführung des von der Kolbenstange 2 in der Zugstufe mitgeführten Öls verläuft der Schleppölentlastungskanal von der Öldichtung 4 über den Ringraum 10, einen Durchlaß 29, den Hohlraum 7 und eine Bohrung 32 zum Arbeitsraum 16.

Auf den nicht umbördelten Teilen der Kante 24 liegt die Ringplatte 18, die als Gummipufferanschlag dient.

Fig. 9 zeigt einen Zweirohrdämpfer, der aus einem Arbeitsraum 16 besteht, der durch den Dämpferzylinder 1 gebildet wird und am unteren Ende durch das Bodenventil 30 und oben durch den Führungsverschluß 20 begrenzt wird. Im zylinderförmigen Führungsteil 3 des Führungsverschlusses gleitet die Kolbenstange 2, die im Arbeitsraum 16 den Dämpfungskolben 15 aufnimmt. Der Dämpferzylinder 1 ist von einem Außenzylinder 23 umgeben. In dem so gebildeten Ringraum befindet sich der Ausgleichsraum 19, der etwa zur Hälfte mit Öl gefüllt ist, während der Arbeitsraum 16 volle Ölfüllung aufweist. Der Außenzylinder 23 verbindet den Führungsverschluß 20 mit der das Bodenventil abstützenden Bodenkappe 31.

In Fig. 10 ist der Führungsverschluß für einen Zweirohrdämpfer mit-drei Ringformteilen näher beschrieben. Das becherförmige Ringformteil 8 liegt mit seiner Innenwandung am Führungsteil 3 der Kolbenstange 2 an. Das radial außen liegende Teil 24 des Ringformteils 8 umgreift die Oberkante des Dämpferzylinders 1. Wegen des größeren Radiuses der Kolbenstange 2 eines Federbeins wird der Abstand zwischen dem inneren Teil 34 und dem äußeren Teil 24 des Ringformteils 8 so bemessen, daß das becherförmige Ringformteil 8 durch Paßsitz des Seitenteils 37 des Ringformteils 9 verschlossen ist.

Das Ringformteil 9 überbrückt außerdem abstandsweise die Wandung des Dämpferzylinders 1 und stützt sich an der Innenwandung des Außenzylinders 23 und der den Dämpferzylinder und den Außenzylinder verschließenden Abschlußkappe 6 ab. Die Abschlußkappe 6 trägt außerdem die die Kolbenstange 2 umgreifende und an ihrem Umfang anliegenden Öldichtung 4. Für eine wirksame Entlüftung des Zweirohrfederbeins sorgt die im Ringformteil 9 vorgesehene Entlüftungsbohrung 25 und der zwischen dem Ringformteil 9 und dem die Oberkante des Dämpferzylinders 1 umgreifenden Teil des Ringformteils 8 vorgesehene elastische Ventilring 26. Der Außenzylinder 23 ist mittels der Dichtung 27 zwischen der Innenwandung des Außenzylinders 23 und der Stütz- und Distanzeinheit abgedichtet. Zur Fixierung des Führungsverschlusses im Außenzylinder 23 weist dieser eine umlaufende Einschnürung 12 auf, auf der die Abstützt- und Distanzeinheit zu liegen kommt. Über dem Führungsverschluß ist eine die Kolbenstange 2 umgreifende, als Gummipufferanschlag dienende Ringplatte 18 befestigt.

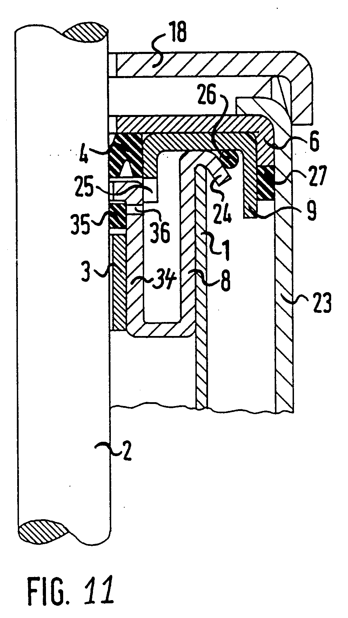

Fig. 11 zeigt eine weitere Ausführungsform der Abstütz- und Distanzeinheit für einen Zweirohrschwingungsdämpfer. Das becherförmige Ringformteil 8 liegt ebenfalls am Führungsteil 3 an und trägt oberhalb dessen an seiner der Kolbenstange 2 zugewandten Seite eine Hochdruckdichtung 35. Mit seinem Teil 24 umgreift das Ringformteil 8 auch hier den Dämpferzylinder 1. Das Ringformteil 9 verschließt das becherförmige Ringformteil 8, indem es sich an oder auf dem inneren Teil 34 des Ringformteils 8 abstützt und auf dem abgewinkelten Teil 24 aufliegt. Im Bereich des Außenzylinders 23 stützt es sich an der Abschlußkappe 6 ab. Die als Niederdruckdichtung ausgebildete Öldichtung 4 wird vom Ringformteil 9 gehalten. Der Entlüftungskanal wird durch die im Ringformteil 8 befindliche Bohrung 36 und die als Schlitz oder Bohrung ausgebildete Entlüftungsöffnung 25 sowie dem zwischen dem den Dämpferzylinder 1 umgreifenden Teil 24 und dem Ringformteil 9 befindlichen Rückschlag-Ventil 26 gebildet.

Die erfindungsgemäße Abstütz- und Distanzeinheit 5 ist zusammen mit der Öldichtung 4 als vormontierte Einheit einbaubar.

### Bezugszeichen

- 1: Dämpferzylinder
- 2: Kolbenstange
- 3: Führungsteil
- 4: Öldichtung
- 5: Abstütz- und Distanzeinheit
- 6: Abschlußkappe
- 7: Hohlraum
- 8: Ringformteil
- 9: Ringformteil
- 10: Ringraum
- 11: Einsickung
- 12: Einschnürung
- 13: Rückschlagventil
- 14: Dichtung
- 15: Dämpfungskolben
- 16: Arbeitsraum
- 17: Trennkolben
- 19: Ausgleichsraum
- 20: Führungsverschluß
- 21: Bohrung
- 22: Bodenteil
- 23: Außenzylinder
- 24: Kante
- 25: Entlüftungsbohrung
- 26: Ventilring
- 27: Dichtung
- 28: Teil
- 29: Durchlaß
- 30: Bodenventil
- 31: Bodenkappe
- 32: Kante
- 33: Kante
- 34: Teil
- 35: Hochdruckdichtung
- 36: Bohrung

## Patentansprüche

1. Hydraulischer Schwingungsdämpfer für Kraftfahrzeuge mit einem Dämpfungsflüssigkeit enthaltenden Dämpferzylinder (1), einer in diesem sich hin- und herbewegenden, einen Dämpfungskolben (15) tragenden Kolbenstange (2) und einen am von der Kolbenstange (2) durchdrungenen Ende angeordneten, einen Schleppölentlastungskanal aufweisenden Führungsverschluß (20) mit einem zylinderförmigen Führungsteil (3) für die Kolbenstange (2), einer die Kolbenstange kontaktierenden Öldichtung (4) und einer aus mehreren, aus blechgeformten Teilen gebildeten Abstütz- und Distanzeinheit (5), die das zylinderförmige Führungsteil (3) der Kolbenstange (2) am Dämpferzylinder (1) radial und axial abstützt, wobei ein erstes Ringformteil (8) einen im wesentlichen becherförmigen Querschnitt aufweist, dadurch gekennzeichnet, daß die Abstütz- und Distanzeinheit (5) mindestens ein weiteres, das Ringformteil (8) teilweise überlappendes Ringformteil (9,6) aufweist und das Ringformteil (9) zur Bildung eines Hohlraumes (7) das Ringformteil (8) verschließt.

2. Schwingungsdämpfer nach Anspruch 1, dadurch gekennzeichnet, daß die Abstütz- und Distanzeinheit (5) an ihrer der Kolbenstange (2) zugewandten Seite die die Kolbenstange umgebende Öldichtung (4) oberhalb oder unterhalb des rohrförmigen Führungsteil (3) lagert und/oder hält.

3. Schwingungsdämpfer nach Anspruch 2, dadurch gekennzeichnet, daß die Abstütz- und Distanzeinheit (5) ringförmig, mit einem im wesentlichen rechteckförmigen Querschnitt ausgebildet ist.

4. Schwingungsdämpfer nach einem der Ansprüche 1-3, dadurch gekennzeichnet, daß das zweite Ringformteil (9) das Ringformteil (8) teilweise überlappt.

5. Schwingungsdämpfer nach einem der Ansprüche 1 bis 4, dadurch gekennzeichnet, daß ein die Ringformteile (8, 9) umgreifendes Ringformteil als eine den Dämpferzylinder (1) verschließende Abschlußkappe (6) ausgebildet ist.

6. Schwingungsdämpfer nach Anspruch 5, dadurch gekennzeichnet, daß das zweite Ringformteil (9) an der Abschlußkappe (6) und der Außenwandung des Führungsteils (3) anliegt.

7. Schwingungsdämpfer nach einem der Ansprüche 4 bis 6, dadurch gekennzeichnet, daß das Führungsteil (3) von einem Teil des Ringformteils (9) oder des Ringformteils (8) gebildet ist.

8. Schwingungsdämpfer nach Anspruch 7, dadurch gekennzeichnet, daß das becherförmige Ringformteil (8) an der Außenwandung des Führungsteils (3) anliegt.

9. Schwingungsdämpfer nach einem oder mehreren der Ansprüche 4 bis 8 bis 11, dadurch gekennzeichnet, daß das Ringformteil (9) an der Innenwandung des Dämpferzylinders (1) anliegt.

10. Schwingungsdämpfer nach einem oder mehreren der Ansprüche 4 bis 8, dadurch gekennzeichnet, daß das Ringformteil (8) eine Bohrung (29) aufweist, die den Schleppölentlastungskanal (21) vom Ringraum (10) zum Arbeitsraum (16) bildet.

11. Schwingungsdämpfer nach einem oder mehreren der Ansprüche 1 bis 12, dadurch gekennzeichnet, daß die Abstütz- und Distanzeinheit (5) abdichtend an der Innenwandung des Dämpferzylinders (1) anliegt.

12. Schwingungsdämpfer nach einem oder mehreren der Ansprüche 1 bis 8, dadurch gekennzeichnet, daß der Dämpferzylinder (1) von einen Außenzylinder (23) umgeben ist, die Abschlußkappe (6) den Dämpferzylinder (1) und dem Außenzylinder (23) verschließt und das das Ringformteil (8) verschließende Ringformteil (9) die Oberkante des Dämpferzylinders (1) abstandsweise übergreift und sich an der Abschlußkappe (6) und/oder der Innenwandung des Außenzylinders (23) radial und axial abstützt.

13. Schwingungsdämpfer nach einem oder mehreren der Ansprüche 4 bis 12, dadurch gekennzeichnet, daß das Bodenteil (22) des Ringformteils (8) wenigstens einmal gekröpft ist.

14. Schwingungsdämpfer nach Anspruch 13, dadurch gekennzeichnet, daß der Dämpferzylinder (1) von einem Außenzylinder (23) umgeben ist, das Ringformteil (9) den Dämpferzylinder (1) und den Außenzylinder (23) abdichtend verschließt und das Ringformteil (8) sich an der Innenwandung des Dämpferzylinders (1) und des Außenzylinder (23) radial abstützt, wobei das gekröpfte Teil des Ringformteils (8) die Kante (24) des Dämpferzylinders (1) übergreift.

15. Schwingungsdämpfer nach einem oder mehreren der Ansprüche 13 bis 14, dadurch gekennzeichnet, daß das Ringformteil (8) oder das Ringformteil (9) eine Entlüftungsbohrung (25) aufweist, die einen Kanal zwischen dem Ringraum (10), der Öldichtung (4) und dem durch den Außenzylinder (23) geformten Ausgleichsraum (19) bildet, wobei der Kanal ausgleichsraumseitig durch ein Rückschlagventil (13) verschlossen ist.

16. Schwingungsdämpfer nach Anspruch 15, dadurch gekennzeichnet, daß das Rückschlagventil (13) zwischen dem die Oberkante des Dämpferzylinders (1) umgreifenden Teil des Ringformteils (8) und dem mit diesem einen spitzen Winkel bildenden Ringformteil (9) vorgesehen ist.

17. Schwingungsdämpfer nach Anspruch 15 oder 16, dadurch gekennzeichnet, daß das Rückschlag-Ventil (13) ein elastischer Ventilring ist.

18. Schwingungsdämpfer nach Anspruch 15, dadurch gekennzeichnet, daß das Rückschlagventil (13) durch die Kante (24) des Ringformteils (8) oder der Kante (32) des Dämpferzylinders (1) und einem mit der Entlüftungsbohrung (25) korrespondierenden Ventilring (26) gebildet ist.

19. Schwingungsdämpfer nach Anspruch 15, dadurch gekennzeichnet, daß das Rückschlagventil (13) aus einem an der Innenwandung des Ringformteils (8) angeordneten gebogenen Ringteil (38) und einem mit dem Durchlaß korrespondierenden Ventilring (26) gebildet ist.

20. Schwingungsdämpfer nach einem oder mehreren der Ansprüche 13 bis 19, dadurch gekennzeichnet, daß der Außenzylinder (23) mittels einer Dichtung (27) zwischen der Innenwandung des Außenzylinders (23) und der Stütz- und Distanzeinheit (5) abgedichtet ist.

21. Schwingungdämpfer nach einem oder mehreren der Ansprüche 1 bis 20, dadurch gekennzeichnet, daß die Abstütz- und Distanzeinheit (5) als Zuganschlag dient.

22. Schwingungsdämpfer nach einem oder mehreren der Ansprüche 1 bis 21, dadurch gekennzeichnet, daß das Führungsteil (3), die Abstütz- und Distanzeinheit (5) und die Öldichtung (4) eine vormontierte Einheit bilden.

23. Schwingungsdämpfer nach einem oder mehreren der Ansprüche 1 bis 22, dadurch gekennzeichnet, die Abstütz- und Distanzeinheit (5) mittels einer Einsickung (11) oder einer Einschnürung (12) an der Wandung des Dämpferzylinders (1) oder des Außenzylinders (23) gehalten wird.

24. Schwingungsdämpfer nach Anspruch 18, dadurch gekennzeichnet, daß die Dichtung (14, 27) mittels der Einschnürung (12) vorgespannt ist.

25. Schwingungsdämpfer nach einem oder mehreren der Ansprüche 1 bis 24, dadurch gekennzeichnet, daß die Abstütz- und Distanzeinheit durch die voll oder teilweise umgebördelte Kante (33) des Dämpferzylinders (1) oder des Außenzylinders (23) fixiert ist.

## Claims

1. Hydraulic shock absorber for motor vehicles having a damping cylinder (1) containing damping fluid, a piston rod (2) which can be moved in a reciprocating manner in this cylinder and carries a damping piston (15), and having a guide closure (20), which is disposed at the end through which the piston rod (2) passes and comprises an entrainment oil relief duct, with a cylindrical guide part (3) for the piston rod (2), an oil seal (4) contacting the piston rod, and a support and spacer unit (5) formed from a plurality of parts of sheet metal, which unit radially and axially supports the cylindrical guide part (3) of the piston rod (2) against the damping cylinder, wherein a first annular part (8) comprises a substantially beaker-shaped cross-section, characterised in that the support and spacer unit (5) comprises at least one further annular part (9, 6) overlapping the annular part (8), and the annular part (9) closes the annular part (8) in order to form a hollow chamber (7).

2. Shock absorber according to claim 1, characterised in that the support and spacer unit (5) on its side facing the piston rod (2) accommodates and/or holds the oil seal (4) surrounding the piston rod above or below the tube-like guide part (3).

3. Shock absorber according to claim 2, characterised in that the support and spacer unit (5) is annular and has a substantially square cross section.

4. Shock absorber according to one of claims 1 to 3, characterised in that the second annular part (9) partially overlaps the annular part (8).

5. Shock absorber according to one of claims 1 to 4, characterised in that an annular part surrounding the annular parts (8, 9) is formed as a closure cap (6) closing the damping cylinder (1).

6. Shock absorber according to claim 5, characterised in that the second annular part (9) lies against the closure cap (6) and the outer wall of the guide part (3).

7. Shock absorber according to one of claims 4 to 6, characterised in that the guide part (3) is formed by a part of the annular part (9) or of the annular part (8).

8. Shock absorber according to claim 7, characterised in that the beaker-shaped annular part (8) lies against the outer wall of the guide part (3).

9. Shock absorber according to one or more of claims 4 to 8 to 11 [sic], characterised in that the annular part (9) lies against the inner wall of the damping cylinder (1).

10. Shock absorber according to one or more of claims 4 to 8, characterised in that the annular part (8) comprises a bore (29) which forms the entrainment oil relief duct (21) from the annular chamber (10) to the working chamber (16).

11. Shock absorber according to one or more of claims 1 to 12, characterised in that the support and spacer unit (5) lies in a sealing manner against the inner wall of the damping cylinder (1).

12. Shock absorber according to one or more of claims 1 to 8, characterised in that the damping cylinder (1) is surrounded by an outer cylinder (23), the closure cap (6) closes the damping cylinder (1) and the outer cylinder (23), and the annular part (9) closing the annular part (8) protrudes over the upper edge of the damping cylinder (1) at a distance and lies axially and radially against the closure cap (6) and/or the inner wall of the outer cylinder (23).

13. Shock absorber according to one or more of claims 4 to 12, characterised in that the base part (22) of the annular part (8) is bent at a right angle at least once.

14. Shock absorber according to claim 13, characterised in that the damping cylinder (1) is surrounded by an outer cylinder (23), the annular part (9) closes the damping cylinder (1) and the outer cylinder (23) in a sealing manner and the annular part (8) lies radially against the inner wall of the damping cylinder (1) and of the outer cylinder (23), wherein the right-angle-bent part of the annular part (8) protrudes over the edge (24) of the damping cylinder (1).

15. Shock absorber according to one or more of claims 13 to 14, characterised in that the annular part (8) or the annular part (9) comprises a venting bore (25) which forms a duct between the annular chamber (10), the oil seal (4) and the compensating chamber (19) formed by the outer cylinder (19), wherein the duct is closed on the compensating chamber side by a non-return valve (13).

16. Shock absorber according to claim 15, characterised in that the non-return valve (13) is provided between the part of the annular part (8) surrounding the upper edge of the damping cylinder (1) and the annular part (9) forming an acute angle with this annular part.

17. Shock absorber according to claim 15 or 16, characterised in that the non-return valve (13) is an elastic valve collar.

18. Shock absorber according to claim 15, characterised in that the non-return valve (13) is formed by the edge (24) of the annular part (8) or the edge (32) of the damping cylinder (1) and a valve collar (26) corresponding to the venting bore (25).

19. Shock absorber according to claim 15, characterised in that the non-return valve (13) is formed from a curved ring part (38) disposed on the inner wall of the annular part (8) and a valve collar (26) corresponding to the through passage.

20. Shock absorber according to one or more of claims 13 to 19, characterised in that the outer cylinder (23) is sealed by a seal (27) between the inner wall of the outer cylinder (23) and the support and spacer unit (5).

21. Shock absorber according to one or more of claims 1 to 20, characterised in that the support and spacer unit (5) serves as a pull stop.

22. Shock absorber according to one or more of claims 1 to 21, characterised in that the guide part (3), the support and spacer unit (5) and the oil seal (4) form a preassembled unit.

23. Shock absorber according to one or more of claims 1 to 22, characterised in that the support and spacer unit (5) is held against the wall of the damping cylinder (1) or of the outer cylinder (23) by means of an indentation (11) or a neck (12).

24. Shock absorber according to claim 18, characterised in that the seal (14, 27) is pretensioned by means of the neck (12).

25. Shock absorber according to one or more of claims 1 to 24, characterised in that the support and spacer unit is fixed by the fully or partially beaded edge (33) of the damping cylinder (1) or of the outer cylinder (23).

## Revendications

1. Amortisseur hydraulique pour véhicule, comportant un cylindre d'amortisseur (1) contenant un fluide d'amortissement, une tige de piston (2) se déplaçant en va-et-vient dans celui-ci et portant un piston d'amortissement (15), et une fermeture de guidage (20) disposée à l'extrémité traversée par la tige de piston (2), présentant un canal de détente de l'huile entraînée et comportant une pièce de guidage (3) de forme cylindrique pour la tige de piston (2), un joint étanche à l'huile (4) en contact avec la tige de piston et une unité de soutien et d'écartement (5) formée de plusieurs pièces en tôle façonnées, qui soutient radialement et axialement la pièce de guidage (3) de forme cylindrique de la tige de piston (2) sur le cylindre d'amortisseur (1), dans lequel une première pièce de forme annulaire (8) présente une section transversale essentiellement en forme de cuvette, caractérisé en ce que l'unité de soutien et d'écartement (5) présente au moins une autre pièce de forme annulaire (9,6) recouvrant partiellement la pièce de forme annulaire (8), et en ce que la pièce de forme annulaire (9) ferme la pièce de forme annulaire (8) pour former une chambre creuse (7).

2. Amortisseur selon la revendication 1, caractérisé en ce que, de son côté tourné vers la tige de piston (2), l'unité de soutien et d'écartement (5) maintient et/ou porte le joint étanche à l'huile (4) entourant la tige de piston, au-dessus ou en dessous de la pièce de guidage (3) de forme tubulaire.

3. Amortisseur selon la revendication 2, caractérisé en ce que l'unité de soutien et d'écartement (5) est configurée en forme d'anneau, avec une section transversale essentiellement rectangulaire.

4. Amortisseur selon l'une des revendications 1-3, caractérisé en ce que la seconde pièce de forme annulaire (9) recouvre partiellement la pièce de forme annulaire (8).

5. Amortisseur selon l'une des revendications 1 à 4, caractérisé en ce qu'une pièce de forme annulaire entourant les pièces de forme annulaire (8, 9) est configurée comme capot d'extrémité (6) fermant le cylindre d'amortisseur (1).

6. Amortisseur selon la revendication 5, caractérisé en ce que la seconde pièce de forme annulaire (9) est ajuste au capot d'extrémité (6) et à la paroi extérieure de la pièce de guidage (3).

7. Amortisseur selon l'une des revendications 4 à 6, caractérisé en ce que la pièce de guidage (3) est formée par une partie de la pièce de forme annulaire (9) ou de la pièce de forme annulaire (8).

8. Amortisseur selon la revendication 7, caractérisé en ce que la pièce de forme annulaire (8) en forme de cuvette est ajusté à la paroi extérieure de la pièce de guidage (3).

9. Amortisseur selon l'une ou plusieurs des revendications 4 à 8, caractérisé en ce que la pièce de forme annulaire (9) est ajusté à la paroi intérieure du cylindre d'amortisseur (1).

10. Amortisseur selon l'une ou plusieurs des revendications 4 à 8, caractérisé en ce que la pièce de forme annulaire (8) présente un alésage (29) qui forme le canal (21) de détente de l'huile entraînée entre la chambre annulaire (10) et la chambre de travail (16).

11. Amortisseur selon l'une ou plusieurs des revendications 1 à 10, caractérisé en ce que l'unité de soutien et d'écartement (5) est ajustée de manière étanche à la paroi intérieure du cylindre d'amortisseur (1).

12. Amortisseur selon l une ou plusieurs des revendications 1 à 8, caractérisé en ce que le cylindre d'amortisseur (1) est entouré par un cylindre extérieur (23), le capot d'extrémité (6) ferme le cylindre d'amortisseur (1) et le cylindre extérieur (23), et la pièce de forme annulaire (9) fermant la pièce de forme annulaire (8) recouvre a distance le bord supérieur du cylindre d'amortisseur (1) et s'appuie radialement et axialement contre le capot d'extrémité (6) et/ou la paroi intérieure du cylindre extérieur (23).

13. Amortisseur selon l'une ou plusieurs des revendications 4 à 12, caractérise en ce que la pièce de fond (22) de la pièce de forme annulaire (8) est rabattue au moins une fois.

14. Amortisseur selon la revendication 13, caractérisé en ce que le cylindre d'amortisseur (1) est entouré par un cylindre extérieur (23), la pièce de forme annulaire (9) ferme de manière étanche le cylindre d'amortisseur (1) et le cylindre extérieur (23), et la pièce de forme annulaire (8) s'appuie radialement contre la paroi intérieure du cylindre d'amortisseur (1) et du cylindre extérieur (23), tandis que la partie rabattue de la pièce de forme annulaire (8) recouvre le bord (24) du cylindre d'amortisseur (1).

15. Amortisseur selon l'une ou plusieurs des revendications 13 à 14, caractérise en ce que la pièce de forme annulaire (8) ou la pièce de forme annulaire (9) présentent un alésage (25) de purge d'air qui forme un canal entre la chambre annulaire (10), le joint étanche à l'huile (4) et la chambre d'équilibrage (19) formée par le cylindre extérieur (23), tandis que le canal est fermé par une soupape anti-retour (13), du côté de la chambre d'équilibrage.

16. Amortisseur selon la revendication 15, caractérisé en ce que la soupape anti-retour (13) est prévue entre la partie de la pièce de forme annulaire (8) qui entoure le bord supérieur du cylindre d'amortisseur (1) et la pièce de forme annulaire (9) formant un angle aigu avec celle-ci.

17. Amortisseur selon la revendication 15 ou 16, caractérisé en ce que la soupape anti-retour (13) est une bague de soupape élastique.

18. Amortisseur selon la revendication 15, caractérisé en ce que la soupape anti-retour (13) est formée par le bord (24) de la pièce de forme annulaire (8) ou par le bord (32) du cylindre d'amortisseur (1), et une bague de soupape (26) correspondant à l'alésage (25) de purge d'air.

19. Amortisseur selon la revendication 15, caractérisé en ce que la soupape anti-retour (13) est formée d'une pièce annulaire (38) courbée, disposée sur la paroi intérieure de la pièce de forme annulaire (8), et d'une bague de soupape (26) correspondant au passage.

20. Amortisseur selon l'une ou plusieurs des revendications 13 à 19, caractérisé en ce que le cylindre extérieur (23) est fermé de manière étanche au moyen d'un joint étanche (27) situé entre la paroi intérieure du cylindre extérieur (23) et l'unité de soutien et d'écartement (5).

21. Amortisseur selon l'une ou plusieurs des revendications 1 à 20, caractérisé en ce que l'unité de soutien et d'écartement (5) sert de butée en traction.

22. Amortisseur selon l'une ou plusieurs des revendications 1 à 21, caractérise en ce que la pièce de guidage (3), l'unité de soutien et d'écartement (5) et le joint étanch à l'huile (4) forment une unité pré-montée.

23. Amortisseur selon l'une ou plusieurs des revendications 1 à 22, caractérisé en ce que l'unité de soutien et d'écartement (5) est maintenue contre la paroi du cylindre d'amortisseur (1) ou du cylindre extérieur (23) au moyen d'un rétrécissement (11) ou d'une gorge (12).

24. Amortisseur selon la revendication 18, caractérisé en ce que le joint étanche (14, 27) est pré-serré au moyen de la gorge (12).

25. Amortisseur selon l une ou plusieurs des revendications 1 à 24, caractérisé en ce que l'unité de soutien et d'écartement est fixée par le bord (33), complètement ou partiellement rabattu, du cylindre d'amortisseur (1) ou du cylindre extérieur (23).
